# FASCICULE DE BREVET EUROPEEN

(11) **EP 2 033 293 B1**
(45) Date de publication et mention de la délivrance du brevet: **31.10.2018**
(21) Numéro de dépôt: 07788958.2
(22) Date de dépôt: 04.06.2007
(51) Int. Cl.: B60L 7/16, H02J 7/14, H02J 7/34

(54) **PROCEDE DE RECUPERATION D'ENERGIE ELECTRIQUE DANS UN VEHICULE A FREINAGE RECUPERATIF**
VERFAHREN ZUR RÜCKGEWINNUNG VON ELEKTRISCHER ENERGIE IN EINEM FAHRZEUG MIT NUTZBREMSUNG
METHOD FOR RECOVERING ELECTRICAL ENERGY IN A VEHICLE WITH REGENERATIVE BRAKING

(30) Priorité: 27.06.2006 FR 0652675
(43) Date de publication de la demande: 11.03.2009
(73) Titulaire: VALEO EQUIPEMENTS ELECTRIQUES MOTEUR, 94046 Créteil Cedex (FR)
(72) Inventeur: MASFARAUD, Julien, F-75010 Paris (FR); DOFFIN, Hugues, F-92290 Chatenay Malabry (FR)
(86) Numéro de dépôt international: PCT/FR2007/051373
(87) Numéro de publication internationale: WO 2008/000982

(56) Documents cités:
- EP-A- 1 316 464
- EP-A2- 0 868 005
- WO-A-97/24793
- US-A1- 2003 052 650

## Description

La présente invention trouve application de manière avantageuse dans les domaines du secteur automobile. Elle concerne particulièrement un procédé de récupération d'énergie électrique dans un véhicule automobile utilisant la fonction d'un dispositif de freinage récupératif.

Lors d'un freinage d'un véhicule automobile, de l'énergie cinétique est dissipée sous forme de chaleur dans les disques de frein. Pour récupérer cette énergie cinétique il existe dans l'état de la technique des dispositifs de freinage récupératif. De tels dispositifs sont aptes à récupérer l'énergie cinétique issue du freinage du véhicule automobile afin de le transformer en énergie électrique.

Dans un véhicule automobile, le dispositif de freinage récupératif est connecté à un réseau de distribution électrique du véhicule qui comporte une batterie destinée à stocker cette énergie électrique convertie. Cette batterie est habituellement une batterie au plomb conventionnelle. Le réseau de distribution électrique restitue l'énergie emmagasinée dans la batterie aux différents équipements électriques et électroniques embarqués dans le véhicule automobile.

De manière générale, les besoins en énergie électrique des véhicules automobiles vont en augmentant du fait des équipements électriques et électroniques toujours plus nombreux. Deux voies sont possibles pour répondre aux besoins croissants des véhicules, à savoir, augmenter la puissance des alternateurs et la capacité de stockage de la batterie ou bien améliorer le rendement énergétique du système d'alimentation électrique.

Le document EP1316464A2 décrit un procédé selon lequel le prélèvement de couple effectué par le freinage récupératif est augmenté lorsque le véhicule descend une pente et que sa vitesse a tendance à s'accroître. Le freinage récupératif mis en oeuvre au moyen d'un générateur électrique a ainsi pour effet de stabiliser la vitesse du véhicule lorsque celui-ci descend une pente.

La récupération d'énergie électrique par freinage récupératif contribue à une augmentation du rendement moyen du système d'alimentation électrique et apporte davantage de disponibilité énergétique pour une même puissance nominale de l'installation.

L'augmentation de la puissance des alternateurs et de capacité de stockage de la batterie présente différents inconvénients en termes de coût, d'encombrement et d'implantation dans un environnement difficile (sous le capot moteur) et, également, de poids.

De plus, les batteries au plomb habituellement utilisées dans les véhicules ne sont pas adaptées pour être chargées avec des courants importants pendant un temps suffisant pour assurer une récupération d'une partie de l'énergie issue du dispositif de freinage. Dans ce type de dispositif, la gestion de l'énergie transitoire issue du freinage récupératif n'est pas très efficace pour assurer une régulation de la tension circulant dans le réseau de distribution électrique du véhicule et les charges répétées de la batterie au plomb ont pour effet de faire vieillir celle-ci prématurément.

Une autre solution consiste à équiper le système d'alimentation électrique du véhicule d'un second réseau de distribution électrique avec un stockeur d'énergie secondaire ayant une capacité de stockage différente de celle de la batterie principale ou stockeur principal. Le second réseau de distribution cohabite avec le premier réseau ayant le stockeur principal. Le second réseau ayant le stockeur secondaire délivre une tension flottante d'alimentation continue et le premier réseau ayant le stockeur principal délivre une basse tension d'alimentation continue, généralement inférieure à ladite tension flottante. Un réseau global bi-tension de distribution d'énergie électrique est ainsi obtenu.

Les deux stockeurs sont couplés entre eux par l'intermédiaire d'un convertisseur de tension continu-continu réversible. Le convertisseur a pour fonction de permettre des transferts d'énergie entre les deux stockeurs et les réseaux de distribution. Un générateur de courant électrique, comportant un alternateur ou alterno-démarreur couplé au moteur thermique du véhicule, alimente directement en énergie électrique le stockeur secondaire et, à travers le convertisseur, le stockeur principal.

Il est connu d'utiliser un pack de condensateurs de très grande capacité en tant que stockeur secondaire. Ces condensateurs de très grande capacité sont habituellement appelés « super-capacité » ou « super-condensateur » par l'homme du métier. Le stockeur secondaire, qui est appelé aussi « super-capacité » dans la suite de la description, a pour fonction de récupérer un maximum d'énergie électrique lorsque le générateur de courant électrique opère en freinage récupératif.

Par rapport à une batterie classique au plomb, la super-capacité est indifférente au nombre des cycles de charge / décharge et à leur profondeur et est peu contraint au niveau de la tension de charge qui pourra varier dans des proportions importantes.

Pour choisir la plage de tension de récupération de la super-capacité utilisée dans le véhicule automobile, il faut réponde à des contraintes de tension de démarrage, car c'est la phase de démarrage qui demande la plus grande puissance électrique afin de garantir une énergie suffisante à l'alterno-démarreur opérant en mode démarreur pour assurer le démarrage du moteur thermique. Lorsque le conducteur démarre, la super-capacité se décharge et si aucun freinage significatif n'intervient, l'énergie électrique récupérée n'est pas suffisante pour charger complètement la super-capacité. Si un arrêt du véhicule survient et que le conducteur essaye de le redémarrer, la super-capacité assurera un redémarrage de moins bonne qualité du moteur thermique.

La solution antérieure connue, préconise un intervalle de récupération d'énergie dans la super-capacité qui est en général de 18 à 24V de manière à pouvoir répondre aux contraintes ci-dessus liées au démarrage du moteur thermique.

La présente invention a pour objet de fournir un nouveau procédé de récupération d'énergie électrique pour véhicule automobile à freinage récupératif selon la revendication 1, permettant d'avancer dans la voie d'une amélioration du rendement moyen du système d'alimentation électrique du véhicule. La revendication 9 décrit une installation de récupération d'énergie dans un véhicule, en application dudit procédé.

Le procédé selon l'invention de récupération d'énergie électrique dans un véhicule automobile à freinage récupératif, est mis en oeuvre dans un véhicule équipé à cet effet d'un dispositif à capacité électrique, pour emmagasiner une énergie électrique fournie par une machine électrique tournante du véhicule lors d'une opération de freinage récupératif.

Conformément à l'invention, il est choisi, en fonction de la vitesse de rotation initiale de ladite machine électrique tournante, d'appliquer une stratégie de récupération d'énergie parmi au moins les deux suivantes :
- une première stratégie de récupération d'énergie favorisant une puissance élevée fournie par ladite machine électrique tournante ; et
- une seconde stratégie de récupération d'énergie favorisant un rendement élevé de ladite machine électrique tournante.

Le procédé décrit brièvement ci-dessus prévoit donc au moins deux voies d'optimisation qui sont l'optimisation de puissance et l'optimisation de rendement. Pendant la phase de récupération d'énergie, on considère que la face avant du moteur du véhicule ne limite pas la puissance mécanique que peut prélever la machine électrique. Dans cette optique, l'optimisation est mieux obtenue en voulant maximiser la puissance mécanique prélevée, et donc l'énergie électrique récupérée pendant un freinage. C'est en ce sens qu'une stratégie visant à augmenter la puissance électrique récupérée par la machine électrique est privilégiée.

A l'inverse, si la face avant du moteur du véhicule constitue une limitation de la puissance mécanique prélevée sur le moteur thermique, il est souhaitable de maximiser le rendement de la machine électrique. A iso-puissance mécanique prélevée, la puissance électrique récupérée de la machine électrique est maximale. C'est en ce sens qu'une stratégie visant à augmenter le rendement sera privilégiée.

Selon une autre caractéristique particulière, la première stratégie de récupération d'énergie est choisie lorsque la vitesse de rotation initiale de la machine électrique tournante est supérieure à un premier seuil, fixé à au moins 10000 tr/mn. En variante, le premier seuil est fixé à une vitesse au moins égale à 12000 tr/mn.

Selon une autre caractéristique particulière, la seconde stratégie de récupération d'énergie est choisie lorsque la vitesse de rotation initiale de la machine électrique tournante est inférieure à un second seuil, fixé au plus à 8000 tr/mn. En variante, le second seuil est fixé au plus à 6000 tr/mn.

Le procédé selon l'invention peut également présenter au moins une des caractéristiques suivantes :
- l'on déclenche le freinage récupératif dès le début d'un freinage quand il s'agit d'un freinage court à vitesse initiale élevée.
- l'on déclenche le freinage récupératif en fin de freinage lors d'un freinage long.
- l'on déclenche le freinage récupératif de manière transitoire pendant la traction du véhicule par un moteur thermique de celui-ci, de façon à déplacer un point de fonctionnement couple - vitesse dudit moteur thermique.

L'invention concerne également une installation de récupération d'énergie dans un véhicule ladite installation comportant des moyens automatiques de commande de freinage récupératif autorisant une mise en oeuvre du procédé selon l'invention brièvement décrit ci-dessus.

L'invention trouve des applications particulièrement avantageuses en combinaison avec le système à réseau bi-tension dit 14+X. Cette architecture possède deux réseaux électriques indépendants dont l'un, le réseau 14+X, de par sa technologie, est capable de fonctionner à une tension variable. Ceci permet une mise en oeuvre particulièrement efficace mettre de stratégies de pilotages nouvelles pour maximiser le rendement ou la puissance électrique fournie en phase de récupération.

D'autres caractéristiques et avantages de l'invention apparaîtront au cours de la lecture de la description détaillée qui suit pour la compréhension de laquelle on se reportera aux figures annexées parmi lesquelles :
- la figure 1 représente schématiquement une illustration de moyens mettant en oeuvre un mode de réalisation de l'invention.
- la figure 2 est une illustration d'étapes du procédé de fonctionnement du dispositif de l'invention.
- la figure 3 illustre un graphique représentant des nappes de puissance électrique pendant des phases de freinage récupératif du véhicule.
- la figure 4 illustre un graphique représentant des nappes de rendement électrique pendant des phases de freinage récupératif du véhicule.

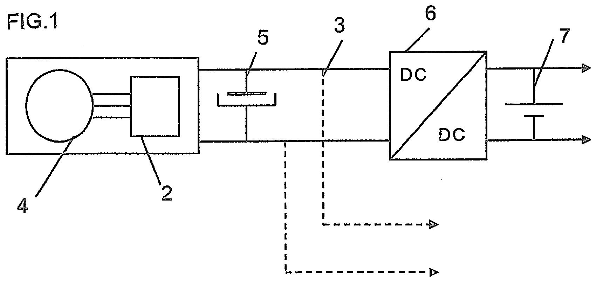

La figure 1 montre, dans un cas particulier d'application, une représentation schématique d'un dispositif de récupération d'énergie électrique installé dans un véhicule automobile. Un convertisseur de tension alternatif-continu (AC/DC) 2 est relié, d'un part, à un bus continu 3, et, d'autre part, à une machine électrique tournante 4. Le convertisseur AC/DC 2 et la machine 4 sont de type polyphasé, typiquement de type triphasé. Le convertisseur AC/DC 2 est ici un dispositif électrique de type redresseur de tension permettant de convertir des tensions alternatives triphasées fournies par la machine 4, fonctionnant en mode alternateur, en une tension continue. Dans d'autres modes de réalisation de l'invention dans lesquels la machine 4 est réversible et fonctionne en alterno-démarreur, le convertisseur AC/DC 2 est également réversible est comporte un mode onduleur pour alimenter avec des tensions triphasées la machine 4 qui est alors en moteur électrique ou démarreur.

Le bus continu 3 comporte un réservoir d'énergie électrique 5. Ce réservoir 5 est une super-capacité dans ce mode de réalisation particulier. On se place dans le cas où cette super-capacité est dimensionnée pour un freinage citadin fréquent, et non pour les plus gros freinages effectués par le conducteur du véhicule. La super-capacité 5 est alimentée par la machine 4 via le convertisseur AC/DC 2.

Le bus continu 3 comporte deux réseaux d'équipements consommateurs. Le premier réseau fournit une tension continue fluctuante désignée 14+X et est connecté aux bornes de la super-capacité. Les équipements consommateurs reliés à ce premier réseau sont de préférence des charges qui acceptent de fonctionner sous un réseau flottant (dégivrage, essuie glace, etc.). Un deuxième réseau fournit une tension voisine de la tension 12 V disponible aux bornes d'une batterie au plomb. Les premier et second réseaux sont reliés à travers un convertisseur de tension continu-continu (DC-DC) 6 réversible, qui autorise des transferts d'énergie avec les tensions adéquates et permet notamment d'alimenter le deuxième réseau et de charger la batterie 7.

La notion de batterie se comprend, dans le cadre de la présente invention, comme couvrant tout dispositif formant un réservoir d'énergie électrique rechargeable, aux bornes duquel une tension électrique continue non nulle est disponible, du moins dans un état de charge non nul du dispositif.

Les équipements électriques ou électroniques sont notamment des lignes de connexion branchées en parallèle à la super-capacité 5 ou des consommateurs électriques branchés en parallèle à la batterie 7. Les consommateurs électriques dans un véhicule automobile peuvent être, entre autres, des phares d'éclairage et feux de signalisation, une radio, un équipement de climatisation, des essuie-glace, etc.

La machine 4 peut donc être un alterno-démarreur. Le concept d'alterno-démarreur réversible vise une machine électrique tournante équipée d'un convertisseur AC/DC réversible.

Lorsque le convertisseur AC/DC est en mode onduleur, la machine tournante opère comme un moteur électrique par exemple pour démarrer le moteur thermique du véhicule. L'alterno-démarreur permet un démarrage rapide et silencieux du moteur, entièrement géré par électronique

Lorsque le convertisseur AC/DC est en mode redresseur, des tensions alternatives fournies par la machine tournante opérant en alternateur sont redressées pour alimenter les réseaux d'alimentation électrique du véhicule.

Le dispositif de l'invention permet d'optimiser le rendement de la récupération d'énergie et la puissance du moteur thermique du véhicule automobile, en accumulant de l'énergie électrique dans la super-capacité pendant un fonctionnement en freinage récupératif et en la restituant pour couvrir des besoins du véhicule.

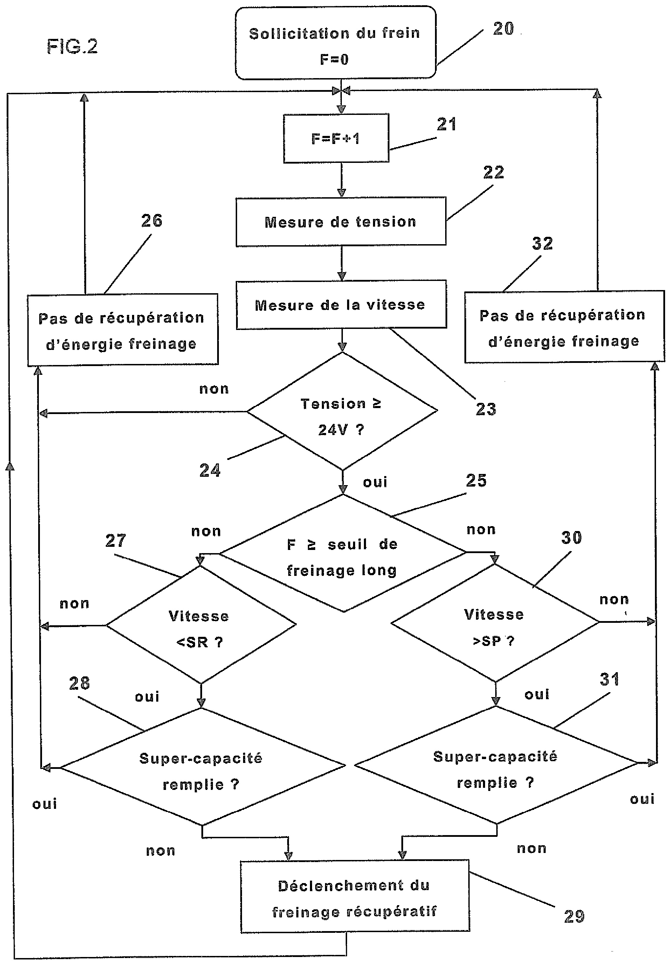

La figure 2 concerne un mode de réalisation particulier décrit ici à titre d'exemple non limitatif. La figure 2 illustre des étapes de fonctionnement mises en oeuvre dans ce mode de réalisation particulier, au niveau d'une logique de commande qui se réalise de manière concrète avec des matériels connus.

Lorsque le conducteur sollicite le frein du véhicule, à l'étape 20, il y a remise à zéro d'un indice F destiné à indiquer la longueur d'une phase de freinage. A l'étape 21, la logique de commande incrémente l'indice F d'une unité. A l'étape 22, la logique de commande mesure la tension aux bornes de la super-capacité. A l'étape 23 la logique de commande mesure la vitesse de la machine électrique 4.

A l'étape 24, lorsque la tension mesurée est supérieure à une valeur par exemple de 24 V, alors la logique de commande applique l'étape 25, sinon elle applique l'étape 26. A l'étape 25, la logique de commande vérifie si l'indice F est supérieur à un seuil indiquant que le freinage est long. Si Le freinage est long, la logique de commande applique l'étape 27. Sinon, elle applique l'étape 30.

A l'étape 27, la logique de commande examine si la vitesse de la machine électrique 4 est inférieure à un seuil SR, qui ici est de préférence égal à 8 000 tr/mn environ. Dans ce cas, la logique de commande applique l'étape 28. Sinon, elle applique l'étape 26. A l'étape 28, la logique de commande vérifie si la super-capacité est complètement remplie. Dans ce cas, la logique de commande applique l'étape 26 ; sinon elle applique l'étape 29. A l'étape 26, la logique de commande ne déclenche pas le freinage récupératif et le fonctionnement revient à l'étape 21.

Lorsque l'indice F est inférieur au seuil de freinage long, cela implique que le temps de freinage est court. C'est alors l'étape 30 qui est commandée. La logique de commande détermine si la vitesse de la machine électrique 4 du véhicule est supérieure à un seuil SP, qui ici est de préférence égal à 10 000 tr/mn environ. Dans ce cas la logique de commande applique l'étape 31, dans le cas contraire elle applique l'étape 32. A l'étape 31 la logique de commande vérifie si la super-capacité est complètement remplie. Si oui, elle applique l'étape 32, sinon elle applique l'étape 29. A l'étape 32, la logique de commande ne déclenche pas le freinage récupératif et le système revient à l'étape 21. A l'étape 29, la logique de commande déclenche le freinage récupératif afin d'emmagasiner l'énergie électrique issue de la machine électrique 4.

Lorsque le véhicule se déplace, le conducteur peut avoir à répondre aux situations qui se présentent à lui par deux types différents de freinage, qui sont le freinage court ou intermédiaire et le freinage long. Il est utile d'en tenir compte pour que, quand le conducteur freine, le dispositif de récupération d'énergie permette un emmagasinement optimum de l'énergie disponible de ce fait dans la super-capacité.

Par exemple, si on a un freinage court, de 3 secondes par exemple, ce qui risque d'arriver fréquemment en conduite en ville, le dispositif de freinage récupératif n'aura pas le temps de remplir totalement la super-capacité. Dans ce cas, on trouve intérêt, pendant la fenêtre de freinage, à utiliser la meilleure puissance pour le meilleur rendement et donc à privilégier une récupération au début de la phase de freinage. Conformément à l'invention, la récupération d'énergie s'opère lorsque la vitesse de la machine électrique 4 est supérieure à un seuil de vitesse élevée, qui est dans le cas d'application considéré, de l'ordre de 10 000 tr/mn, et que la tension débitée par la machine est supérieure à 24 V. Il s'agit alors d'une optimisation du fonctionnement qui concerne la puissance électrique de la super-capacité.

Dans le cas contraire, si la phase de freinage est suffisamment longue par rapport à un seuil prédéterminé, il n'y aura récupération d'énergie que lorsque la vitesse de la machine électrique 4 sera inférieure à un seuil de faible vitesse, que l'on prévoit égal 8 000 tr/mn dans le cas d'exemple considéré. Il s'agit alors d'une optimisation de fonctionnement touchant au rendement électrique de la super-capacité.

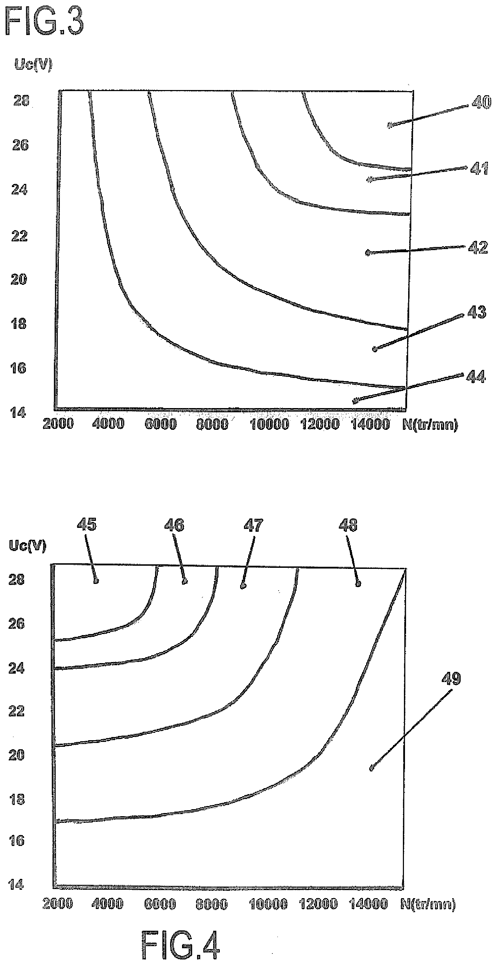

La figure 3 est un graphique qui explique les caractéristiques de l'invention en liaison avec une optimisation en puissance. Les courbes représentent des nappes de puissance électrique pendant des phases de freinage récupératif du véhicule.

On distingue six nappes de puissance qui sont déterminée par la tension aux bornes de la super-capacité en fonction de la vitesse de rotation de la machine électrique 4. On observe clairement que pour maximiser la puissance électrique récupérable, qui dans le cas choisi pour illustrer l'invention avoisine les 10 kW, on a intérêt à définir une fenêtre de récupération conduisant à privilégier de récupérer l'énergie à haute vitesse, avec un degré de liberté moindre imposé par le véhicule, mais que par contre, il sera préférable de fonctionner à des tensions plus élevées pour avoir des freinages récupératifs plus efficaces. Par exemple, si le freinage survient à une vitesse de 10 000 tr/mn et arrive à 2 000 tr/mn, on favorise une récupération optimisée en puissance en commençant la récupération d'énergie au plus haut point de vitesse, et comme on ne peut pas prévoir la fin de la sollicitation du frein alors même qu'en général, en fonction de la topographie des lieux, on peut savoir où le véhicule va s'arrêter, il est préférable de laisser la récupération se poursuivre. Elle ne s'arrêtera que si la super-capacité est totalement remplie ou si le conducteur arrête de freiner.

Pour maximiser la puissance électrique pendant une phase de récupération d'énergie, cela implique de charger les super-capacités sous une tension élevée quelle que soit la vitesse de fonctionnement. Néanmoins à très basse vitesse, la tension qui maximise la puissance électrique est inférieure à 28 V, notamment de l'ordre de 24V. Une stratégie plus fine pourrait intégrer une tension moyenne de freinage récupératif sur laquelle serait centrée la fenêtre de récupération. Si l'on souhaite maximiser la puissance électrique récupérée, il est préférable d'activer la phase de récupération dès le début d'un freinage. Ceci afin de fonctionner à la vitesse la plus élevée possible.

La figure 4 est un graphique représentant des nappes de rendement électrique pendant des phases de freinage récupératif du véhicule. On distingue six nappes de rendement qui sont déterminées par la tension aux bornes de la super-capacité en fonction de la vitesse de rotation de la machine électrique.

Si on veut maximiser le rendement électrique récupérable, qui dans le cas présent est considéré voisin de 10 kW, on est conduit à définir une fenêtre de récupération privilégiant la récupération à basse vitesse. Un fonctionnement à des tensions plus élevées permettra des freinages récupératifs plus efficaces. Les points de haut rendement sont à haute tension, et pas à basse tension, en raison des pertes se produisant au niveau de la machine électrique, qui augmentent avec la vitesse de la machine électrique, alors que le rendement, lui, décroît en fonction de la même vitesse. Une maximisation du rendement va de pair avec un fonctionnement à haute tension, car pour les mêmes pertes caloriques la puissance électrique récupérée est accrue. Ainsi, pour favoriser une optimisation de fonctionnement en rendement, on est conduit à privilégier un freinage récupératif à basse vitesse.

Si l'on maximalise le rendement électrique, il est préférable de fonctionner dans les tensions hautes des super-capacités. Pendant un freinage long pour lequel la vitesse initiale est élevée, il peut être profitable de n'activer la récupération qu'à la fin du freinage, à basse et moyenne vitesses.

Par ailleurs, on notera ici que le procédé selon l'invention, bien que décrit ici dans le contexte d'une opération de récupération d'énergie consécutive à un appui sur la pédale de frein du véhicule, s'applique également dans des cas où un mode de freinage récupératif transitoire est déclenché par exemple par le superviseur du véhicule ou du moteur thermique, pendant la traction du véhicule par le moteur thermique, sans appui sur la pédale de frein, de façon à déplacer une point de fonctionnement couple - vitesse du moteur thermique.

## Revendications

1. Procédé de récupération d'énergie électrique dans un véhicule automobile à freinage récupératif, ledit véhicule étant équipé à cet effet d'un dispositif à capacité électrique (5), pour emmagasiner une énergie électrique fournie par une machine électrique tournante (4) du véhicule lors d'une opération de freinage récupératif, **caractérisé en ce que**, en fonction de la vitesse de rotation initiale de ladite machine électrique tournante (4), il est choisi d'appliquer une stratégie de récupération d'énergie parmi au moins les deux suivantes :
- une première stratégie de récupération d'énergie favorisant une puissance élevée fournie par ladite machine électrique tournante (4) lorsque ladite vitesse de rotation initiale est supérieure à un premier seuil ; et
- une seconde stratégie de récupération d'énergie favorisant un rendement élevé de ladite machine électrique tournante (4) lorsque ladite vitesse de rotation initiale est inférieure à un second seuil, le second seuil étant inférieur au premier seuil.

2. Procédé selon la revendication 1 **caractérisé en ce que** ladite première stratégie de récupération d'énergie est choisie lorsque la vitesse de rotation initiale de ladite machine électrique tournante est supérieure à un premier seuil, fixé à au moins 10000 tr/mn.

3. Procédé selon la revendication 2 **caractérisé en ce que** ledit premier seuil est fixé à une vitesse au moins égale à 12000 tr/mn.

4. Procédé selon l'une quelconque des revendications 1 à 3 **caractérisé en ce que** ladite seconde stratégie de récupération d'énergie est choisie lorsque la vitesse de rotation initiale de ladite machine électrique tournante est inférieure à un second seuil, fixé au plus à 8000 tr/mn.

5. Procédé selon la revendication 4 **caractérisé en ce que** ledit second seuil est fixé au plus à 6000 tr/mn.

6. Procédé selon l'une quelconque des revendications 1 à 5 **caractérisé en ce que** l'on déclenche le freinage récupératif dès le début d'un freinage quand il s'agit d'un freinage court à vitesse initiale élevée.

7. Procédé selon l'une quelconque des revendications 1 à 5 **caractérisé en ce que** l'on déclenche le freinage récupératif en fin de freinage lors d'un freinage long.

8. Procédé selon l'une quelconque des revendications 1 à 5 **caractérisé en ce que** l'on déclenche le freinage récupératif de manière transitoire pendant la traction du véhicule par un moteur thermique de celui-ci, de façon à déplacer une point de fonctionnement couple - vitesse dudit moteur thermique.

9. Installation de récupération d'énergie dans un véhicule **caractérisé en ce qu'**elle comporte des moyens automatiques de commande de freinage récupératif configurés pour l'application d'un procédé selon l'une quelconque des revendications 1 à 8.

## Patentansprüche

1. Verfahren zur Rückgewinnung von elektrischer Energie in einem Kraftfahrzeug mit Nutzbremsung, wobei das Fahrzeug zu diesem Zweck mit einer Vorrichtung mit elektrischer Kapazität (5) ausgestattet ist, um eine von einer drehenden elektrischen Maschine (4) bei einem Nutzbremsvorgang abgegebene elektrische Energie zu speichern, **dadurch gekennzeichnet, dass** in Abhängigkeit von der anfänglichen Drehzahl der drehenden elektrischen Maschine (4) die Anwendung einer Energierückgewinnungsstrategie unter mindestens den beiden folgenden gewählt wird:
- eine erste Energierückgewinnungsstrategie, die eine von der drehenden elektrischen Maschine (4) abgegebene hohe Leistung begünstigt, wenn die anfängliche Drehzahl größer als ein erster Schwellenwert ist, und
- eine zweite Energierückgewinnungsstrategie, die einen hohen Wirkungsgrad der drehenden elektrischen Maschine (4) begünstigt, wenn die anfängliche Drehzahl kleiner als ein zweiter Schwellenwert ist, wobei der zweite Schwellenwert kleiner als der erste Schwellenwert ist.

2. Verfahren nach Anspruch 1, **dadurch gekennzeichnet, dass** die erste Energierückgewinnungsstrategie gewählt wird, wenn die anfängliche Drehzahl der drehenden elektrischen Maschine größer als ein erster Schwellenwert ist, der auf mindestens 10000 U/min festgelegt ist.

3. Verfahren nach Anspruch 2, **dadurch gekennzeichnet, dass** der erste Schwellenwert auf eine Drehzahl von mindestens 12000 U/min festgelegt ist.

4. Verfahren nach einem der Ansprüche 1 bis 3, **dadurch gekennzeichnet, dass** die zweite Energierückgewinnungsstrategie gewählt wird, wenn die anfängliche Drehzahl der drehenden elektrischen Maschine kleiner als ein zweiter Schwellenwert ist, der auf höchstens 8000 U/min festgelegt ist.

5. Verfahren nach Anspruch 4, **dadurch gekennzeichnet, dass** der zweite Schwellenwert auf höchstens 6000 U/min festgelegt ist.

6. Verfahren nach einem der Ansprüche 1 bis 5, **dadurch gekennzeichnet, dass** man die Nutzbremsung ab dem Beginn einer Bremsung auslöst, wenn es sich um eine kurze Bremsung bei hoher anfänglicher Drehzahl handelt.

7. Verfahren nach einem der Ansprüche 1 bis 5, **dadurch gekennzeichnet, dass** man die Nutzbremsung am Ende der Bremsung auslöst, wenn es sich um eine lange Bremsung handelt.

8. Verfahren nach einem der Ansprüche 1 bis 5, **dadurch gekennzeichnet, dass** man die Nutzbremsung vorübergehend während des Antreibens des Fahrzeugs durch dessen Verbrennungsmotor auslöst, so dass ein Arbeitspunkt Drehmoment/Drehzahl des Verbrennungsmotors verschoben wird.

9. Anlage zur Energierückgewinnung in einem Fahrzeug, **dadurch gekennzeichnet, dass** sie automatische Mittel zur Steuerung der Nutzbremsung beinhaltet, die auf die Anwendung eines Verfahrens nach einem der Ansprüche 1 bis 8 ausgelegt sind.

## Claims

1. Method for harvesting electrical energy in a motor vehicle with regenerative braking, said vehicle being equipped to this end with an electrical capacitance device (5), for storing an electrical energy supplied by a rotating electrical machine (4) of the vehicle during a regenerative braking operation, **characterized in that**, as a function of the initial speed of rotation of said rotating electrical machine (4), a choice is made to apply an energy harvesting strategy from at least the following two:
- a first energy harvesting strategy favouring a high power supplied by said rotating electrical machine (4) when said initial speed of rotation is above a first threshold; and
- a second energy harvesting strategy favouring a high efficiency of said rotating electrical machine (4) when said initial speed of rotation is below a second threshold, the second threshold being lower than the first threshold.

2. Method according to Claim 1, **characterized in that** said first energy harvesting strategy is chosen when the initial speed of rotation of said rotating electrical machine is above a first threshold, set at at least 10,000 rpm.

3. Method according to Claim 2, **characterized in that** said first threshold is set at a speed at least equal to 12,000 rpm.

4. Method according to any one of Claims 1 to 3, **characterized in that** said second energy harvesting strategy is chosen when the initial speed of rotation of said rotating electrical machine is below a second threshold, set at no higher than 8,000 rpm.

5. Method according to Claim 4, **characterized in that** said second threshold is set at no higher than 6,000 rpm.

6. Method according to any one of Claims 1 to 5, **characterized in that** the regenerative braking is triggered at the start of a braking operation when it is a short braking at high initial speed.

7. Method according to any one of Claims 1 to 5, **characterized in that** the regenerative braking is triggered at the end of braking in a long braking operation.

8. Method according to any one of Claims 1 to 5, **characterized in that** the regenerative braking is triggered transiently during the traction of the vehicle by a heat engine thereof, so as to displace a torque - speed operating point of said heat engine.

9. Energy harvesting installation in a vehicle, **characterized in that** it comprises automatic regenerative braking control means configured for the application of a method according to any one of Claims 1 to 8.
